# EUROPEAN PATENT APPLICATION

(11) **EP 4 603 948 A1**
(43) Date of publication of application: **20.08.2025**
(21) Application number: 24809530.9
(22) Date of filing: 07.11.2024
(51) Int. Cl.: G06F 1/16, C09J 9/00

(54) **ELECTRONIC DEVICE COMPRISING DISPLAY PROTECTION STRUCTURE**

(30) Priority: 28.12.2023 KR 20230195838; 15.03.2024 KR 20240036714
(71) Applicant: Samsung Electronics Co., Ltd, Suwon-si, Gyeonggi-do 16677 (KR)
(72) Inventor: JANG, Byunggun, Suwon-si, Gyeonggi-do 16677 (KR); LEE, Jeongil, Suwon-si, Gyeonggi-do 16677 (KR); HWANG, Sungjun, Suwon-si, Gyeonggi-do 16677 (KR)
(74) Representative: Walaski, Jan Filip
(86) International application number: PCT/KR2024/017527
(87) International publication number: WO 2025/143523

(57) **Abstract**

An electronic device includes a housing including a supporting structure, a display including a display panel and an extension portion bent toward an inside of the housing from a side of the display panel, a molding surrounding a side of the display panel and the extension portion, and an adhesive member disposed between the molding and the supporting structure, and the molding includes a portion including a recessed area recessed toward the display from a surface facing the supporting structure, and the adhesive member is disposed between the supporting structure and a portion of the molding disposed between the recessed portion and the side wall. Other embodiments are possible.

## Description

### [Technical Field]

The present disclosure relates to an electronic device including a display protection structure.

### [Background Art]

Due to a miniaturization of an electronic device and a reduction of a bezel of a display, a display driving circuit is disposed on a rear surface of the display. For connecting the display driving circuit disposed on the rear surface of the display with a display panel, wires may be disposed in a bent portion extending from a side exterior surface of the display panel. The bent portion may be vulnerable to external impact.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device is disclosed. The electronic device may comprise a housing. The housing may comprise a supporting structure and a side wall forming a side exterior surface of the electronic device. The electronic device may further include a display. The display may comprise a display panel including a display portion and an extension portion, the extension portion including a first extension portion bent from the display portion and a second extension portion extending from the first extension portion. The electronic device may further include a molding. The molding may surround at least a portion of the extension portion of the display panel. The molding may comprise a first portion adhesively attached to the supporting structure, and a second portion having a recessed area facing the supporting structure. The recessed area may be overlapped with the second extension portion of the display panel when viewed in a direction orthogonal to the display.

According to an embodiment, an electronic device is disclosed. The electronic device may comprise a housing. The housing may include a bracket. The electronic device may further include a display. The display may comprise a display panel including a display portion and an extension portion, the extension portion including a first extension portion bent from the display portion and a second extension portion extending from the first extension portion. The electronic device may further include a molding. The molding may surround at least a portion of the extension portion of the display panel. The electronic device may further include an adhesive member. The adhesive member may couple the molding and the bracket. The molding may comprise a first portion attached to the bracket by the adhesive member, a second portion having a recessed area facing the bracket, and a third portion spaced apart from the bracket, and the first portion may be disposed between the second portion and a side wall of the housing, and the second portion may be disposed between the first portion and the third portion.

### [Description of the Drawings]

FIG. 1 is a diagram illustrating an electronic device.
FIG. 2 is an exploded perspective view of an electronic device.
FIG. 3 is a cross-sectional view in which a lower portion of an electronic device is cut.
FIG. 4 is a diagram illustrating a housing including a plate and a side wall of an electronic device.
FIG. 5 is a diagram illustrating a rear surface of a display of an electronic device.
FIGS. 6A, 6B, and 6C are cross-sectional views in which a lower portion of an electronic device is cut in various positions.
FIG. 7 is a cross-sectional view in which a lower portion of an electronic device is cut along an edge.
FIG. 8 is a block diagram of an electronic device in a network environment.

### [Mode for Invention]

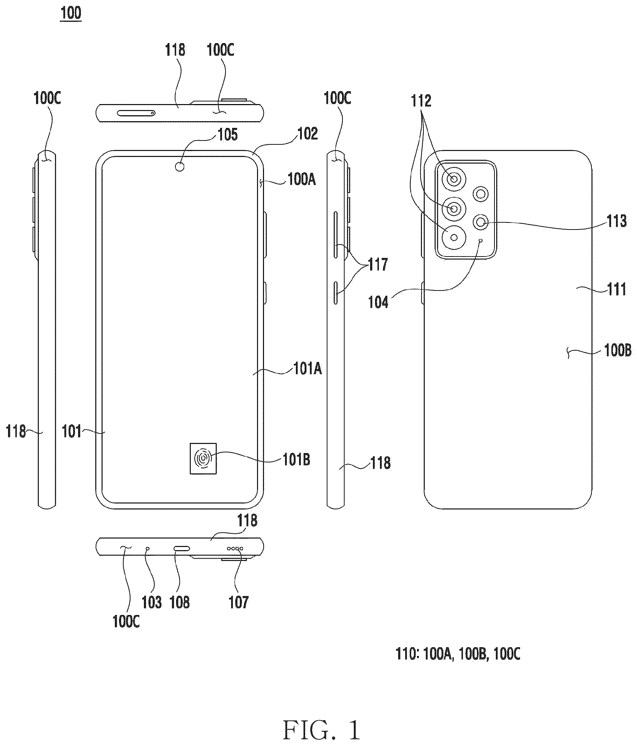

FIG. 1 is a diagram illustrating an electronic device.

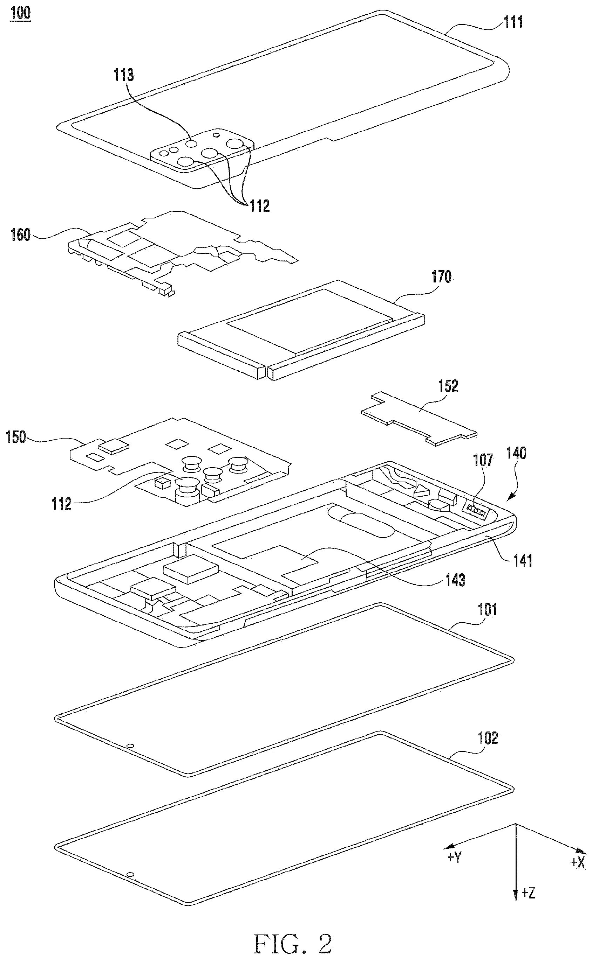

Referring to FIG. 1, an electronic device 100 may include a housing 110 forming an exterior of the electronic device 100. For example, the housing 110 may include a first surface (or a front surface) 100A, a second surface (or a rear surface) 100B, and a third surface (or a side surface) 100C surrounding a space between the first surface 100A and the second surface 100B. The housing 110 may refer to a structure (e.g., a frame structure 140 of FIG. 2) forming at least a portion of the first surface 100A, the second surface 100B, and/or the third surface 100C.

The electronic device 100 may include a substantially transparent front plate 102. The front plate 102 may form at least a portion of the first surface 100A. The front plate 102 may include, for example, a glass plate including various coating layers or a polymer plate, but is not limited thereto.

The electronic device 100 may include a substantially opaque rear plate 111. The rear plate 111 may form at least a portion of the second surface 100B. The rear plate 111 may be formed of coated or colored glass, ceramic, polymer, metal (e.g., aluminum, stainless steel (STS), or magnesium), or a combination of at least two of the above materials.

The electronic device 100 may include a side bezel structure (or side member) 118 (e.g., a side wall 141 of a frame structure 140 of FIG. 2). The side bezel structure 118 may be coupled to the front plate 102 and/or the rear plate 111 to form at least a portion of the third surface 100C of the electronic device 100. For example, the side bezel structure 118 may form all of the third surface 100C of the electronic device 100, and for another example, the side bezel structure 118 may form the third surface 100C of the electronic device 100 together with the front plate 102 and/or the rear plate 111.

Unlike the illustrated example, when the third surface 100C of the electronic device 100 is partially formed by the front plate 102 and/or the rear plate 111, the front plate 102 and/or the rear plate 111 may include a region that is bent from a periphery thereof toward the rear plate 111 and/or the front plate 102 and seamlessly extends. The extended region of the front plate 102 and/or the rear plate 111 may be positioned at both ends of, for example, a long edge of the electronic device 100, but is not limited to the above-described examples.

The side bezel structure 118 may include a metal and/or a polymer. The rear plate 111 and the side bezel structure 118 may be integrally formed and may include the same material (e.g., a metal material such as aluminum), but are not limited thereto. For example, the rear plate 111 and the side bezel structure 118 may be formed in separate configurations and/or may include different materials.

The electronic device 100 may include at least one of a display 101, an audio module 103, 104, 107, a sensor module (not illustrated), a camera module 105, 112, 113, a key input device 117, a light emitting device (not illustrated), and/or a connector hole 108. The electronic device 100 may omit at least one of the components (e.g., a key input device 117 or a light emitting device (not illustrated)), or may further include another component.

The display 101 (e.g., a display module 160 of FIG. 2) may be visually exposed through a substantial portion of the front plate 102. For example, at least a portion of the display 101 may be visible through the front plate 102 forming the first surface 100A. The display 101 may be disposed on the rear surface of the front plate 102.

The appearance of the display 101 may be formed substantially the same as the appearance of the front plate 102 adjacent to the display 101. In order to expand the area in which the display 101 is visually exposed, the distance between the outside of the display 101 and the outside of the front plate 102 may be formed to be generally the same.

The display 101 (or the first surface 100A of the electronic device 100) may include a screen display area 101A. The display 101 may provide visual information to a user through the screen display area 101A. In the illustrated example, when the first surface 100A is viewed from the front, it is illustrated that the screen display area 101A is spaced apart from the outside of the first surface 100A and is positioned inside the first surface 100A, but it is not limited thereto. In another implementation, when the first surface 100A is viewed from the front, at least a portion of the periphery of the screen display area 101A may substantially coincide with the periphery of the first surface 100A (or the front plate 102).

The screen display area 101A may include a sensing area 101B configured to obtain biometric information of a user. Here, the meaning of "the screen display area 101A includes the sensing area 101B" may be understood to mean that at least a portion of the sensing area 101B may be overlapped on the screen display area 101A. For example, the sensing area 101B, like other areas of the screen display area 101A, may refer to an area in which visual information may be displayed by the display 101 and additionally biometric information (e.g., fingerprint) of a user may be obtained. In another implementation, the sensing area 101B may be formed in the key input device 117.

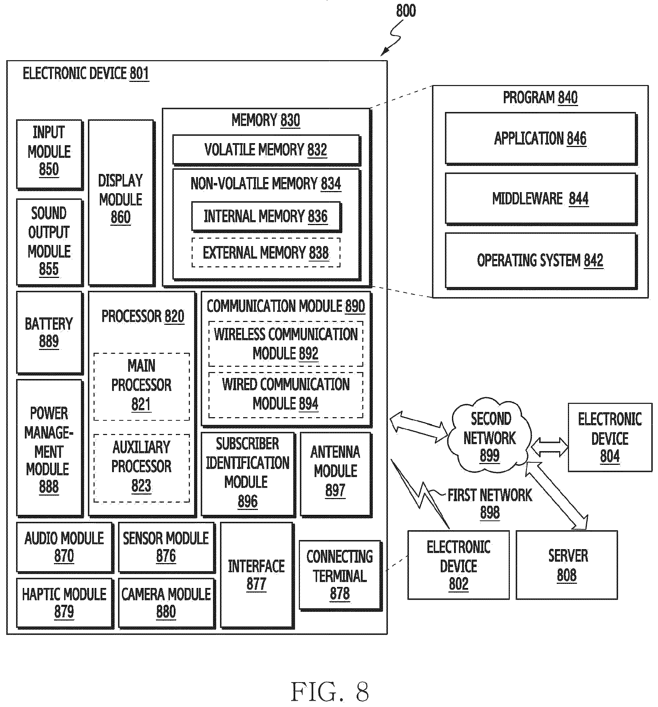

The display 101 may include an area in which the first camera module 105 (e.g., a camera module 880 of FIG. 8) is positioned. An opening may be formed in the area of the display 101, and the first camera module 105 (e.g., a punch hole camera) may be at least partially disposed in the opening to face the first surface 100A. In this case, the screen display area 101A may surround at least a portion of the periphery of the opening. In another implementation, the first camera module 105 (e.g., an under display camera (UDC)) may be disposed under the display 101 to overlap the area of the display 101. In this case, the display 101 may provide visual information to the user through the area, and additionally, the first camera module 105 may obtain an image corresponding to a direction facing the first surface 100A through the area of the display 101.

The display 101 may be coupled to or disposed adjacent to a touch sensing circuit, a pressure sensor capable of measuring the intensity (pressure) of the touch, and/or a digitizer that detects a magnetic field type stylus pen.

The audio modules 103, 104 and 107 (e.g., an audio module 870 of FIG. 8) may include microphone holes 103 and 104 and a speaker hole 107.

The microphone holes 103 and 104 may include a first microphone hole 103 formed in a partial area of the third surface 100C and a second microphone hole 104 formed in a partial area of the second surface 100B. A microphone (not illustrated) for obtaining an external sound may be disposed inside the microphone holes 103 and 104. The microphone may include a plurality of microphones to detect the direction of sound.

The second microphone hole 104 formed in a partial area of the second surface 100C may be disposed adjacent to the camera modules 105, 112 and 113. For example, the second microphone hole 104 may obtain sound according to operations of the camera modules 105, 112, and 113. However, it is not limited thereto.

In an embodiment, the speaker hole 107 may include an external speaker hole 107 and a receiver hole (not illustrated) for a call. The external speaker hole 107 may be formed on a portion of the third surface 100C of the electronic device 100. In another implementation, the external speaker hole 107 may be implemented as one hole with the microphone hole 103. Although not illustrated, a receiver hole (not illustrated) for a call may be formed on another portion of the third surface 100C. For example, the receiver hole for a call may be formed on the opposite side of the external speaker hole 107 on the third surface 100C. For example, based on the illustration of FIG. 1, the external speaker hole 107 may be formed on the third surface 100C corresponding to the lower end of the electronic device 100, and the receiver hole for a call may be formed on the third surface 100C corresponding to the upper end of the electronic device 100. However, the present invention is not limited thereto, and in another implementation, the receiver hole for a call may be formed at a position other than the third surface 100B. For example, the receiver hole for a call may be formed by a space spaced apart between the front plate 102 (or display 101) and the side bezel structure 118.

The electronic device 100 may include at least one speaker (not illustrated) configured to output sound to the outside of the housing 110 through an external speaker hole 107 and/or a receiver hole (not illustrated) for a call.

The sensor module (not illustrated) (e.g., a sensor module 876 of FIG. 8) may generate an electrical signal or data value corresponding to an internal operating state or an external environmental state of the electronic device 100. For example, the sensor module may include at least one of a proximity sensor, an HRM sensor, a fingerprint sensor, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, and an illumination sensor.

The camera modules 105, 112 and 113 (e.g., a camera module 880 of FIG. 8) may include a first camera module 105 disposed to face the first surface 100A of the electronic device 100, a second camera module 112 disposed to face the second surface 100B, and a flash 113.

The second camera module 112 may include a plurality of cameras (e.g., a dual camera, a triple camera, or a quad camera). However, the second camera module 112 is not necessarily limited to including a plurality of cameras, and may include one camera.

The first camera module 105 and the second camera module 112 may include one or a plurality of lenses, an image sensor, and/or an image signal processor.

The flash 113 may include, for example, a light emitting diode or a xenon lamp. Two or more lenses (infrared camera, wide-angle and telephoto lens) and image sensors may be disposed on one side of electronic device 100.

The key input device 117 (e.g., an input module 850 of FIG. 8) may be disposed on the third surface 100C of the electronic device 100. In another implementation, the electronic device 100 may not include some or all of the key input devices 117, and the not included key input device 117 may be implemented on the display 101 in another form such as a soft key.

The connector hole 108 may be formed on the third surface 100C of the electronic device 100 to accommodate the connector of the external device. A connection terminal (e.g., a connecting terminal 878 of FIG. 8) electrically connected to the connector of the external device may be disposed in the connector hole 108. The electronic device 100 may include an interface module (e.g., an interface 877 of FIG. 8) for processing electrical signals transmitted and received through the connection terminal.

The electronic device 100 may include a light emitting device (not illustrated). For example, the light emitting device (not illustrated) may be disposed on the first surface 100A of the housing 110. The light emitting device (not illustrated) may provide state information of the electronic device 100 in a form of light. The light emitting device (not illustrated) may provide a light source when the first camera module 105 is operated. For example, the light emitting device (not illustrated) may include an LED, an IR LED, and/or a xenon lamp.

FIG. 2 is an exploded perspective view of an electronic device.

Hereinafter, overlapping descriptions of components having the same reference numerals as those of the above-described components will be omitted.

Referring to FIG. 2, the electronic device 100 may include a frame structure 140, a first printed circuit board 150, a second printed circuit board 152, a cover plate 160, and a battery 170.

The frame structure 140 may include a sidewall 141 forming an exterior (e.g., the third surface 100C of FIG. 1) of the electronic device 100 and a support portion 143 extending inward from the sidewall 141. The frame structure 140 may be disposed between the display 101 and the rear plate 111. The sidewall 141 of the frame structure 140 may surround a space between the rear plate 111 and the front plate 102 (and/or the display 101), and the support portion 143 of the frame structure 140 may extend from the sidewall 141 within the space.

The frame structure 140 may support or accommodate other components included in the electronic device 100. For example, the display 101 may be disposed on one surface of the frame structure 140 facing one direction (e.g., the +z direction), and the display 101 may be supported by the support portion 143 of the frame structure 140. For another example, a first printed circuit board 150, a second printed circuit board 152, a battery 170, and a second camera module 112 may be disposed on the other surface facing a direction opposite to the one direction (e.g., the -z direction) of the frame structure 140. The first printed circuit board 150, the second printed circuit board 152, the battery 170, and the second camera module 112 may be mounted on a recess defined by the sidewall 141 and/or the support portion 143 of the frame structure 140.

The first printed circuit board 150, the second printed circuit board 152, and the battery 170 may be coupled to the frame structure 140, respectively. For example, the first printed circuit board 150 and the second printed circuit board 152 may be fixedly disposed in the frame structure 140 through a coupling member such as a screw. For example, the battery 170 may be fixedly disposed on the frame structure 140 through an adhesive member (e.g., a double-sided tape). However, it is not limited by the above-described example.

A cover plate 160 may be disposed between the first printed circuit board 150 and the rear plate 111. The cover plate 160 may be disposed on the first printed circuit board 150. For example, the cover plate 160 may be disposed on a surface facing the -z direction of the first printed circuit board 150.

The cover plate 160 may at least partially overlap the first printed circuit board 150 with respect to the z-axis. The cover plate 160 may cover at least a partial area of the first printed circuit board 150. Through this, the cover plate 160 may protect the first printed circuit board 150 from physical impact or prevent the connector coupled to the first printed circuit board 150 from being separated.

The cover plate 160 may be fixedly disposed on the first printed circuit board 150 through a coupling member (e.g., a screw), or may be coupled to the frame structure 140 together with the first printed circuit board 150 through the coupling member.

The display 101 may be disposed between the frame structure 140 and the front plate 102. For example, a front plate 102 may be disposed on one side (e.g., a +z direction) of the display 101 and the frame structure 140 may be disposed on the other side (e.g., a -z direction).

The front plate 102 may be coupled to the display 101. For example, the front plate 102 and the display 101 may adhere to each other through an optical adhesive member (e.g., optically clear adhesive (OCA) or optically clear resin (OCR)) interposed therebetween.

The front plate 102 may be coupled to the frame structure 140. For example, the front plate 102 may include an outside portion extending outside the display 101 when viewed in the z-axis direction, and may adhere to the frame structure 140 through an adhesive member (e.g., a double-sided tape) disposed between the outside portion of the front plate 102 and the frame structure 140 (e.g., the sidewall 141). However, it is not limited by the above-described example.

The first printed circuit board 150 and/or the second printed circuit board 152 may be equipped with a processor (e.g., a processor 820 of FIG. 8), a memory (e.g., a memory 830 of FIG. 8), and/or an interface (e.g., an interface 877 of FIG. 8). The processor may include, for example, one or more of a central processing unit, an application processor, a graphic processing unit, an image signal processor, a sensor hub processor, or a communication processor. The memory may include, for example, a volatile memory or a nonvolatile memory. The interface may include, for example, a high definition multimedia interface (HDMI), a universal serial bus (USB) interface, an SD card interface, and/or an audio interface. The interface may electrically or physically connect the electronic device 100 to an external electronic device, and may include a USB connector, an SD card/MMC connector, or an audio connector. The first printed circuit board 150 and the second printed circuit board 152 may be operatively or electrically connected to each other through a connection member (e.g., a flexible printed circuit board).

The battery 170 may supply power to at least one component of the electronic device 100. For example, the battery 170 may include a rechargeable secondary cell or a fuel cell. At least a portion of the battery 170 may be disposed on substantially the same plane as the first printed circuit board 150 and/or the second printed circuit board 152.

The electronic device 100 may include an antenna module (not illustrated) (e.g., an antenna module 897 of FIG. 8). The antenna module may be disposed between the rear plate 111 and the battery 170. The antenna module may include, for example, a near field communication (NFC) antenna, a wireless charging antenna, and/or a magnetic secure transmission (MST) antenna. The antenna module, for example, may perform short-range communication with an external device, or wirelessly transmit and receive power to and from the external device.

The housing 110 of the electronic device refer to the construction or structure forming at least portion of the exterior of the electronic device 100. In this respect, at least some of the front plate 102, the frame structure 140, and/or the rear plate 111 forming the exterior of the electronic device 100 may be referred to as the housing 110 of the electronic device 100.

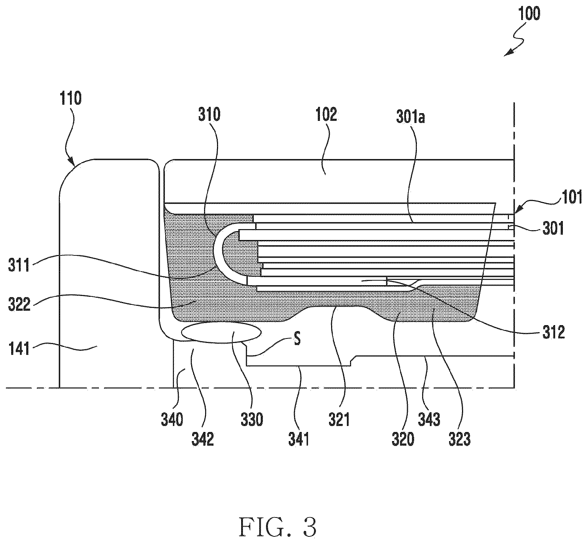

FIG. 3 is a cross-sectional view in which a lower portion of an electronic device is cut.

Referring to FIG. 3, an electronic device 100 may include a display 101, a housing 110, a protection structure 320, and an adhesive member 330. The electronic device 100 may omit at least one of components or may additionally include another component. The electronic device 100 of FIG. 3 may refer to the electronic device of FIGS. 1 and 2.

The housing 110 may include a plate 340 (e.g., the supporting structure 143 of FIG. 2) and a side wall 141 disposed along an edge of the plate 340. The side wall 141 may form a side exterior surface of the electronic device 100. The plate 340 may support electronic components (e.g., a printed circuit board or a battery) inside the display 101 and/or the electronic device 100. The plate 340 may be referred to as a bracket or a supporting plate in terms of supporting or fixing electronic components inside the electronic device 100.

At least a portion of the display 101 may be disposed within the housing 110. The display 101 may form a portion of an outer surface of the electronic device 100. For example, the display 101 may form a front surface of the electronic device 100. The display 101 may include a light emitting element configured to provide visual information toward the front surface of the electronic device 100. The light emitting element may include a light emitting diode (LED), an organic light emitting diode (OLED), a mini LED, a micro LED, or a quantum dot LED (QLED). The display 101 may be an LED display, an OLED display, a micro LED display, a mini LED display, a QLED display, or a liquid crystal display (LCD), which are include the light emitting element. The electronic device 100 may further include a front plate 102 for protecting the display 101. The front plate 102 may include a transparent or translucent material capable of penetrating light emitted from the display 101, in order to provide visual information to outside. The front plate 102 may include a glass or polymer material.

The display 101 may include a display panel 301 and an extension portion 310 bent from a side of the display panel 301 and extending into the housing 110. The display panel 301 may transmit visual information through light emitted from a light emitting element disposed on a substrate. The extension portion 310 may extend from an edge of the display panel 301. For example, the substrate of the display panel 301 may be connected to the extension portion 310. The extending portion 310 may extend from the substrate of the display panel 301. The display 101 may include a display portion 301a, a first extension portion 311, and a second extension portion 312. The display portion 301a may correspond to a portion that provides visual information emitted from the display panel 301. The display portion 301a, which is a portion in which visual information is displayed, may be represented as a display area or a display portion of the display 301. The extension portion 310 may be bent approximately 180 degrees from an edge of the display panel 301 and extended into the housing 110. The extension portion 310 may include the first extension portion 311 extending from the display panel 301 and bending. The extending portion 310 may extend from the substrate of the display panel 301. The first extension portion 311 of the extension portion 310, which is a portion extending from the substrate of the display panel 301 and being bent, may be represented as a bending portion. The extension portion 310 may further include the second extension portion 312 connected to the first extension portion 311. The second extension portion 312 may extend from the first extension portion 311 into the housing 110. The second extension portion 312, which is a flat portion connected to the first extension portion 311, may be represented as a planar portion. A flat portion may refer to not only providing a fully flat surface, but also providing a substantially flat surface despite including some curved surfaces. The second extension portion 312 may face a rear surface of the display panel 301. Facing the rear surface of the display panel 301 may indicate that other layers are disposed between the display panel 301 and the second extension portion 312. For example, facing the rear surface of the display panel 301 may indicate that the second extension portion 312 faces layers (e.g., a cushion layer, a protective layer, or an adhesive layer) disposed on the rear surface of the display 301. Facing the rear surface of the display panel 301 may indicate that the second extension portion 312 is disposed in contact with or close to the layers disposed on the rear surface of the display panel 301. The second extension portion 312 of the extension portion 310 may be formed as a substantially planar surface to be disposed on a surface from among the layers disposed on the rear surface of the display panel 301. The extension portion 310 may be an extension portion of the substrate of the display panel 301. The extension portion 310 and the substrate of the display panel 301 may be formed of a polymer material. For example, the extension portion 310 and the substrate of the display panel 301 may include polyimide (PI) or polyethylene (PET). The display 101 may further include a driving circuit configured to control the light emitting element of the display panel 301. The driving circuit may be disposed in the second extension portion 312 of the extension portion 310. Wires connecting the driving circuit and the display panel 301 may be connected through the first extension portion 311 and/or the second extension portion 312. The wires connecting the driving circuit and the display panel 301 may be disposed on the bent first extension portion 311, thereby being relatively vulnerable to external impact.

The protection structure 320 may surround an edge of the display 101. The protection structure 320 may be referred to as a molding, in that it is a band shape disposed at an edge of the display 101. For example, the protection structure 320 may surround a side of the display panel 301 (or the display portion 301a) and the extension portion 310. The protection structure 320 may extend along a portion of the side wall 141. The protection structure 320 may be disposed along an edge of the display 101 and may fill a space between the extension portion 310 and the display panel 301. The protection structure 320 may surround the display panel 301 and the extension portion 310 and may surround the display panel 301 surrounded by the extension portion 310 or a side of the display 101. The protection structure 320 may protect a portion of the display 101 by surrounding an edge of the display 101. The protection structure 320 may prevent the extension portion 310 from being exposed to an inner space of the electronic device 100. The protection structure 320 may protect the extension portion 310 on which wires connecting the display panel 301 and a display driving circuit are disposed. The protection structure 320 may be referred to as a mold or a molding structure in terms of protecting a portion of the display 101. The protection structure 320 may be referred to as a supporting member or a support in terms of supporting a portion of the display 101.

The protection structure 320 may include a first portion 322, a second portion 321, and a third portion 323. The protection structure 320 may include the second portion 321 formed along a portion of the side wall 141 and dug (recessed) from a surface facing the plate 340 towards the display 101. For example, the second portion 321 may include a recessed area facing the plate 340. The recessed area may be a groove formed from a surface facing the plate 340 toward the display 101. The second portion 321 may be referred to as a recessed portion in terms of including the recessed area. The second portion 321 may be dug from a surface of the protection structure 320. The second portion 321 may be dug toward the second extension portion 312 of the extension portion 310 of the display 101. The second portion 321 may be spaced apart from an internal structure of the electronic device 100. As the second portion 321 may be spaced apart from an internal structure or a mechanism of the electronic device 100 even when the display sags due to external impact, collision with another mechanism may be reduced. Since the second portion 321 is not connected to another mechanism or an internal structure, when an external force is transmitted, a reaction (or rebound) force may not be generated in the second portion 321 and may be generated in a peripheral supporting portion. The second portion 321 may be overlapped with the second extension portion 312 when the display 101 is viewed from above. For example, the recessed area of the second portion 321 may be overlapped with the second extension portion 312 of the display panel 301 when viewed in a direction orthogonal to the display 101. In the second portion 321, impact due to a rebound force transmitted to a portion surrounded by the second portion 321 may be relatively small. The impact due to the rebound force transmitted to the second extension portion 312 surrounded by the second portion 321 may be reduced. The second portion 321 may be spaced apart from the plate 340.

The first portion 322 may be closer to the side wall 141 than the third portion 323. The second portion 321 may be disposed between the first portion 322 and the third portion 323. The third portion 323 may be spaced apart from the first portion 322.

The plate 340 and the first portion 322 may be attached by an adhesive member 330. As the first portion 322 may be coupled to the plate 340, a rebound force due to an external impact may be generated. The first portion 322 may be a path through which a force or a rebound force due to an external impact is transmitted. The first portion 322 may be referred to as a first leg (or rib) in terms of protruding toward the plate 340 and contacting and supporting the plate 340. The third portion 323 may be referred to as a second leg (or rib) in terms of protruding toward the plate 340. A rebound force or a force may be relatively concentrated in the first portion 322, which is a portion of the protection structure 320 in contact with the adhesive member 330. For example, the force or the rebound force transmitted to the first portion 322 in contact with the adhesive member 330 may be transmitted to the first extension portion 311. Compared to the force or the rebound force transmitted to the first portion 322, the force or the rebound force transmitted to the second extension portion 312 may be transmitted relatively less. As the protection structure 320 fills between the display panel 301 and the first extension portion 311 and is relatively far away, the magnitude of a rebound force transmitted through the protection structure 320 may be relatively reduced when reaching the first extension portion 311. As the second portion 321 disposed next to the first portion 322 has a relatively thin thickness, a medium or material which transmits an impact or a rebound force, may be small. Due to the small medium, the rebound force or impact transmitted to the second extension portion 312 may be reduced. When the display 101 is viewed from above, the first portion 322 and a horizontal side (surface) 342 of a stepped portion S in contact with the first portion 322 may be spaced apart from the second extension portion 312. The stepped portion S may connect the horizontal side 342 and a recessed portion 341 with different heights. The stepped portion S may extend in an orthogonal direction from a recessed portion 341 of the plate 340 (or the supporting structure 143). The stepped portion S may be formed in a step shape and may include a horizontal side 342 connected to a portion extending in an orthogonal direction.

The second extension portion 312 in which many wires transmitted to a display driving circuit are disposed may be relatively close to a surface of the protection structure 320. By forming the second portion 321 in the protection structure 320, direct contact between the second portion 321 and an external structure may be reduced. The second extension portion 312 adjacent to the second portion 321 may receive a reduced force while being transmitted from the first portion 322 next to the second portion 321. The second extension portion 312 may reduce a risk of damage by receiving the reduced force.

The plate 340 may include the recessed portion 341 dug (recessed) in a direction toward a rear surface of the housing 110. The recessed portion 341 may extend along a portion of the side wall 141. The recessed portion 341 may at least partially overlap the second portion 321 when the display 101 is viewed from above. The recessed portion 341 and the second portion 321 may space the protection structure 320 apart from the plate 340 supporting the display 101. The second portion 321 may overlap the second extension portion 312 of the extension portion 310 of the display 101 when the display 101 is viewed from above. The recessed portion 341 of the plate 340 (or the supporting structure 143) may at least partially overlap the second portion 321 of the protection structure 320. The second portion 321 of the protection structure 320 may be spaced apart from the recessed portion 341 of the plate 340 (or the supporting structure 143) by a predetermined distance or more. The predetermined distance may be the sum of the depth of the second portion 321 of the protection structure 320 and the depth of the recessed portion 341 of the plate 340 (or the supporting structure 143). The second portion 321 of the protection structure 320 may be relatively spaced apart from other structures, thereby reducing external impact. The plate 340 may further include the stepped portion S disposed on a side of the recessed portion 341 and a protrusion 343 (or a stepped portion) disposed on another side of the recessed portion 341. The recessed portion 341 may be disposed between the stepped portion S and the protrusion 343.

The adhesive member 330 may be disposed between the protection structure 320 and the plate 340. The adhesive member 330 may be in contact with a portion of the protection structure 320 and the plate 340. The adhesive member 330 may be disposed in the stepped portion S along the recessed portion 341. When the adhesive member 330 is excessively applied, the adhesive member 330 disposed along the recessed portion 341 may overflow past the step portion S into the recessed portion 341. Even when the adhesive member 330 flows into the recessed portion 341 past the stepped portion S, contact with the protection structure 320 other than the first portion 322 may be reduced due to a height of the stepped portion S. The adhesive member 330 may be disposed along the side wall 141 between the plate 340 of the housing 110 and the first portion 322 of the protection structure 320, disposed between the second portion 321 and the side wall 141. The adhesive member 330 may include a bond, an adhesive, a double-sided tape, a waterproof adhesive, a waterproof tape, a sealing adhesive, or a sealing tape. The adhesive member 330 may include a polymer, silicone, or a cured adhesive material. The adhesive member 330 may couple the protection structure 320 with the plate 340 (or the supporting structure 143). The coupling may indicate adhesion by the adhesive member. The adhesive member 330 may support a portion of the protection structure 320. The adhesive member 330 may connect the first portion 322 of the protection structure 320 and the horizontal side 342 of the stepped portion S of the plate 340. The adhesive member 330 may be disposed between the first portion 322 of the protection structure 320 and the horizontal side 342 of the stepped portion S of the plate 340. The first portion 322 of the protection structure 320 and the horizontal side 342 of the stepped portion S of the plate 340 may be attached through the adhesive member 330. The stepped portion S and the first portion 322 may extend along a portion of the side wall 141. The stepped portion S and the first portion 322 may extend along a portion of an edge of the electronic device 100. The adhesive member 330 may be spaced apart from the second extension portion 312 when the display 101 is viewed from above. When the display 101 is viewed from above, the adhesive member 330 disposed between the first portion 322 and the horizontal side 342 of the stepped portion S may be spaced apart from the second extension portion 312.

An external force applied to a portion of the display 101 adj acent to the extension portion 310 from outside of the electronic device 100 may be transferred to the adhesive member 330 and a portion of the plate 340, which is in contact with the adhesive member 330, through the protection structure 320. As the adhesive member 330 attaches the first portion 322 with the horizontal side 342 of the stepped portion S, a rebound force due to an external impact may be generated at a point where the first portion 322 and the adhesive member 330 are in contact. For example, in case that an impact is generated outside the electronic device 100, the external impact may be transmitted to the protection structure 320. The external impact transmitted to the protection structure 320 may be transmitted to the first portion 322. The horizontal side 342 of the stepped portion S in contact with the first portion 322 of the plate 340 may generate a rebound force toward the first portion 322. For example, the fixed stepped portion S may provide a force for pushing the first portion 322 from the horizontal side 342 of the stepped portion S as a rebound force due to an external impact. The rebound force transmitted to the first portion 322 may be transmitted along the inside of the protection structure 320. Since the rebound force is transmitted through the protection structure 320 as a medium, a magnitude of the rebound force transmitted to the second portion 321 of the relatively thin protection structure 320 may be relatively small. A magnitude of a rebound force transmitted to the second extension portion 312 disposed on the second portion 321 may be relatively smaller than a magnitude of a rebound force transmitted to the first extension portion 311 disposed on the first portion 322.

According to the above-described embodiment, the electronic device 100 may provide a structure for reducing a rebound force transmitted to the extension portion 310, which is a vulnerable portion of the display 101. The electronic device 100 may include the protection structure 320 protecting the extension portion 310. The protection structure 320 may include the second portion 321 below the second extension portion 312 to reduce a rebound force transmitted to the second extension portion 312 in which wires extending to a driving circuit of the display are disposed. The protection structure 320 including the second portion 321 may reduce a rebound force transmitted to the second extension portion 312 through the first portion 322.

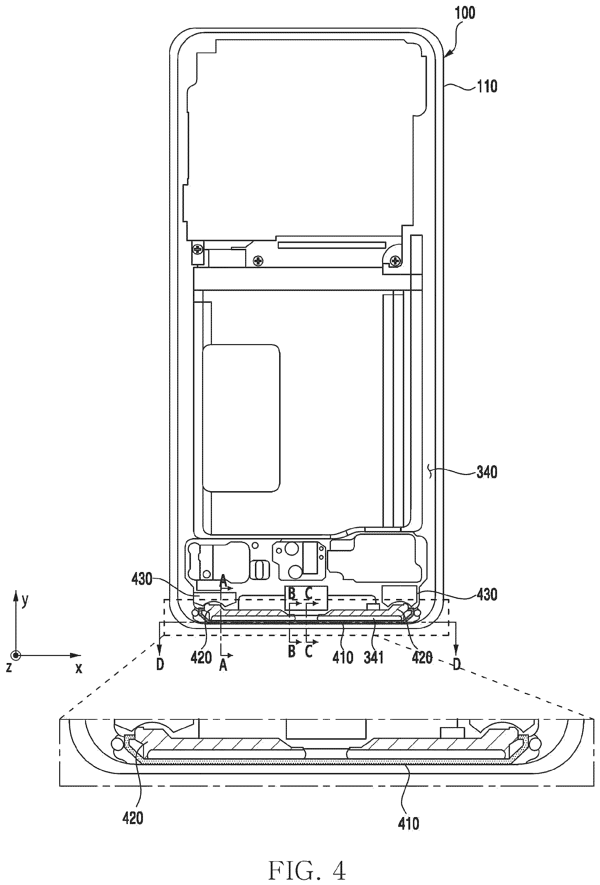

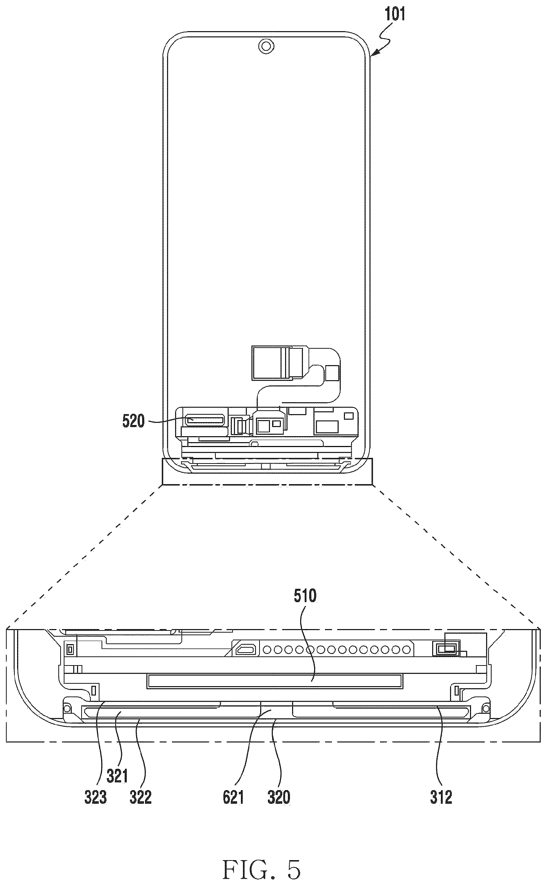

FIG. 4 is a diagram illustrating a housing including a plate and a side wall of an electronic device. FIG. 5 is a diagram illustrating a rear surface of a display of an electronic device.

Referring to FIGS. 4 and 5, an electronic device 100 may include a plate 340 disposed inside a housing 110 or connected to the housing 110. The electronic device 100 may further include adhesive members 410 and 420 disposed on the plate 340. The electronic device 100 may further include an elastic member 430 disposed on the plate 340 (e.g., the supporting structure 143 of FIG. 2). A first adhesive member 410 (e.g., the adhesive member 330 of FIG. 3) may be disposed on an edge of the housing 110 of the electronic device 100. For example, the first adhesive member 410 may be disposed along an edge of the housing 110 corresponding to a lower portion of the electronic device 100. For example, the first adhesive member 410 may be disposed along a portion of a side wall (e.g., the side wall 141 of FIGS. 2 and 3) of the housing 110. An application path of the first adhesive member 410 may extend along a portion of the side wall 141 forming an edge of the housing 110. The first adhesive member 410 may be connected to another adhesive member or another waterproof member disposed along other edges for waterproofing of the electronic device 100. The first adhesive member 410 may be connected to another waterproof member (or another adhesive member) to form a closed curve. The electronic device may further include a waterproof adhesive between the first adhesive member 410 and another waterproof member (or another adhesive member). The first adhesive member 410 and the other waterproof member (or another adhesive member) may include a waterproof tape, a waterproof adhesive, a sealing tape, or a sealing adhesive. The first adhesive member 410 and the other waterproof member may include a polymer, silicon, or a cured adhesive material. A waterproof adhesive disposed between the first adhesive member 410 and the other waterproof member may include a cured in place gasket (CIPG). As a surface of an edge portion of the housing 110 on which the first adhesive member 410 is disposed and a surface of the housing 110 on which the other waterproof member is disposed are different in height, the first adhesive member 410 and the other waterproof member may be spaced apart. The waterproof adhesive may fill a spaced space between the first adhesive member 410 and the other waterproof member to provide a continuous closed curve. The first adhesive member 410, the other waterproof member, and the waterproof adhesive form a closed curve to reduce moisture from flowing into the electronic device from the outside of the electronic device. The first adhesive member 410 may be referred to as a waterproof member or a sealing member in terms of preventing or reducing inflow of moisture or a foreign substance.

The first adhesive member 410 may have a specified width or thickness for waterproofing or sealing. The first adhesive member 410 may be disposed on a stepped portion S. The first adhesive member 410 may have a width corresponding to a surface on which the stepped portion S is disposed. The first adhesive member 410 may have a thickness to be in contact with the stepped portion S and a first portion 322 of a protective member 320.

The second adhesive member 420 may be spaced apart from the first adhesive member 410. The second adhesive member 420 may reinforce an adhesive force between the display 101 and the housing 110. The second adhesive member 420 may include a bond, an adhesive, an adhesive tape, a double-sided tape, a sealing adhesive, or a sealing tape. The second adhesive member 420 may be disposed along a recessed portion 341 formed in the housing 110. The recessed portion 341 may be formed along an edge disposed at a lower portion of the housing 110. The recessed portion 341 may be disposed between the first adhesive member 410 and the second adhesive member 420. The second adhesive member 420 may be disposed inside the electronic device 100 from the first adhesive member 410 or the recessed portion 341. The second adhesive member 420 may be spaced apart from the first adhesive member 410 or the recessed portion 341. The recessed portion 341 may prevent contact with the protective structure 320 surrounding an extended portion 310 of the display 101 even when a portion of the adhesive members 410 and 420 flow into the recessed portion 341. The recessed portion 341 may prevent a portion of the protective structure 320 corresponding to a lower portion of a second extension portion 312, which is a vulnerable portion of the display 101, from contacting the adhesive members 410 and 420. For example, the second portion 321 of the protection structure 320 disposed below the second extension portion 312 may be spaced apart from the adhesive members 410 and 420. By avoiding adhesion between the adhesive members 410 and 420 and a portion of the protection structure 320, a rebound force applied to the second extension portion 312 may be reduced. The second adhesive member 420 may be disposed between a third portion 323 of the protection structure 320 and a protrusion 343 of the housing 110. The second adhesive member 420 may be in contact with the third portion 323 of the protection structure 320 and the protruding portion 343 of the housing 110.

The elastic member 430 may be spaced apart from the second adhesive member 420. The elastic member 430 may be spaced apart from the second adhesive member 420 into the electronic device 100. The elastic member 430 may be disposed in the plate 340 of the housing 110. The elastic member 430 may be spaced apart from the protection structure 320 when the display 101 is viewed from above. The elastic member 430 may include a porous material, rubber, or sponge. The elastic member 430 may be spaced apart from a rear surface of the display 101. The elastic member 430 may reduce damage to the rear surface of the display 101 due to contact with the plate 340 of the housing 110 when the rear surface of the display 101 sags due to external impact. A driving circuit 510 may be spaced apart from the protection structure 320. The driving circuit 510 may be connected to wires extending through the second extension portion 312. The driving circuit 510 may be connected to pixels (e.g., light emitting elements) of a display panel (e.g., the display panel 301 of FIG. 3) through the wires. The driving circuit 510 may be configured to perform control related to color of each of the pixels. The driving circuit 510 may be connected to a printed circuit board (e.g., the first printed circuit board 150 or the second printed circuit board 152 of FIG. 2) of the electronic device 100 through a flexible printed circuit board 520.

The second extended portion 312 of the display 101 may be surrounded by the protection structure 320. The protection structure 320 may include a second portion 321, a first portion 322, and a third portion 323. The first portion 322 may be attached to the plate 340 of the housing 110 by the first adhesive member 410. The third portion 323 may be attached to the plate 340 of the housing 110 by the second adhesive member 420. The first adhesive member 410 and the second adhesive member 420 may not be in contact with the second portion 321. For example, the second portion 321 is spaced apart from the first adhesive member 410 and the second adhesive member 420. The second portion 321 may be disposed between the first adhesive member 410 and the second adhesive member 420.

The second portion 321 may face the recessed portion 341 formed in the plate 340 of the housing 110. The protection structure 320 positioned below the second extension portion 312 by the second portion 321 and the recessed portion 341 may not be in contact with or not be supported by adhesive members. The protection structure 320 supported by the first portion 322 and the third portion 323 may reduce a rebound force transmitted to the second extension portion 312 through the first portion 322 and the third portion 323.

The protection structure 320 may further include a reinforcing portion 621 separating the second portion 321. The reinforcing portion 621 may be filled in a portion of the second portion 321. The reinforcing portion 621 may fill a portion of the second portion 321 formed along an edge of the display 101. The reinforcing portion 621 may fill a portion of the second portion 321 formed along an extending direction of the protection structure 320. The protection structure 320 may be symmetrical with respect to the reinforcing portion 621. The reinforcing portion 621 may be formed across a center of the second portion 321. For example, the second portion 321 may be symmetrical with respect to the reinforcing portion 621. The reinforcing portion 621 may be disposed on an interface (e.g., a USB interface or a power interface) disposed at a lower portion of the electronic device 100. Since both ends of the second extension portion 312 of the display 101 are relatively vulnerable, an area including both ends are disposed on the second portion 321, but a center portion of the second extension portion 312 is relatively strong and may be disposed on the reinforcing portion 621. The reinforcing portion 621 may reinforce rigidity of the weakened protection structure 320 by including the second portion 321.

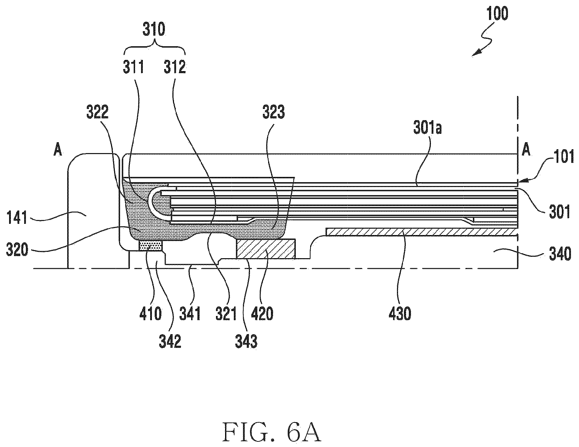

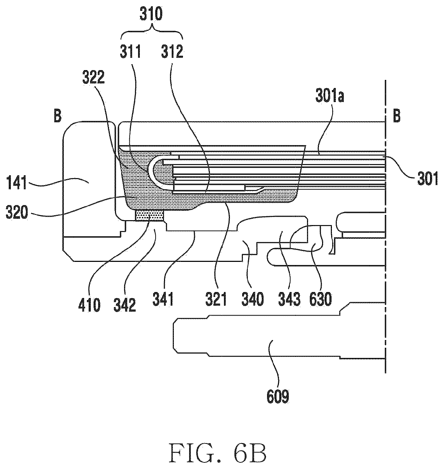

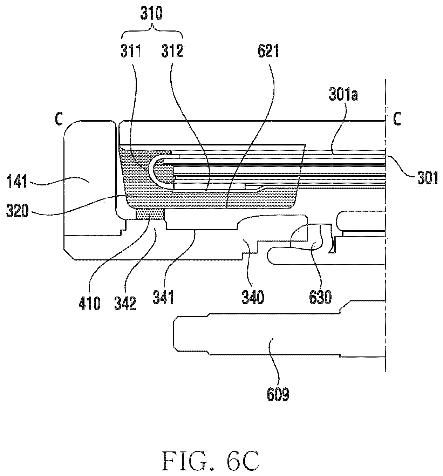

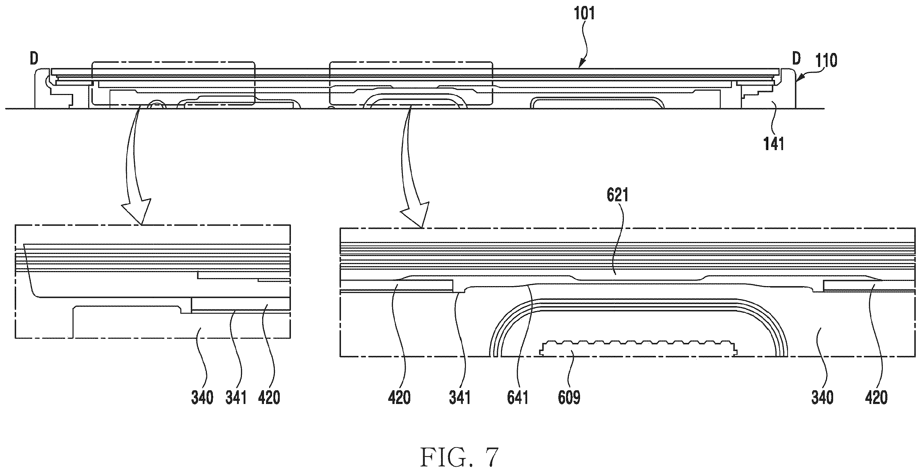

A disposition relationship between the protection structure 320, the adhesive members 410 and 420, and the elastic member 430 will be described through FIGS. 6A, 6B, 6C, and 7.

FIGS. 6A, 6B, and 6C are cross-sectional views in which a lower portion of an electronic device is cut in various positions. FIG. 7 is a cross-sectional view in which a lower portion of an electronic device is cut along an edge.

Referring to FIGS. 6A, 6B, 6C, and 7, an electronic device 100 may include a display 101, a housing 110, a protection structure 320, and a first adhesive member 410, a second adhesive member 420, and an elastic member 430. The protection structure 320, the first adhesive member 410, the second adhesive member 420, and/or the elastic member 430 may be disposed on a portion of a lower end of the electronic device 100. The electronic device 100 may omit at least one of the components or may additionally include another component. The electronic device 100 of FIG. 6A may refer to the electronic device of FIGS. 1, 2, 3, 4 and 5. Descriptions of a configuration of the electronic device 100 that overlap with the configuration of FIGS. 1, 2, 3, 4, and 5 is omitted.

The housing 110 may include a plate 340 and a side wall 141 disposed along an edge of the plate 340.

At least a portion of the display 101 may be disposed within the housing 110. The display 101 may form a portion of an outer surface of the electronic device 100. The electronic device 100 may further include a front plate 102 to protect the display 101. The front plate 102 may provide visual information, by transmitting light emitted from a panel of the display 101 to outside.

The display 101 may include the display panel 301 and an extension portion 310 that is bent from a side of the display panel 301 and extends into the housing 110. The extension portion 310 may extend from an edge of the display panel 301. The extension portion 310 may be bent approximately 180 degrees from an edge of the display panel 301 and extended into an interior of the housing 110. The extension portion 310 may include a first extension portion 311 extending from the display panel 301 and bending. The extension portion 310 may further include a second extension portion 312 connected to the first extension portion 311. The second extension portion 312 may face a rear surface of the display panel 301. For example, the second extension portion 312 may face layers disposed on the rear surface of the display panel 301. The second extension portion 312 may be formed as a substantially flat surface to be disposed on one of the layers disposed on the rear surface of the display panel 301. The display 101 may further include a driving circuit configured to control a light emitting element of the display panel 301.

The protection structure 320 may surround a side of the display panel 301 and the extension portion 310. The protection structure 320 may extend along a portion of the side wall 141. The protection structure 320 may be disposed along an edge of the display 101 and may fill a space between the extension portion 310 and the display panel 301. The protection structure 320 may surround the display panel 301 and the extension portion 310 and may surround a side of the display panel 301 or the display 101 surrounded by the extension portion 310.

The protection structure 320 may include a second portion 321, which is formed along a portion of the side wall 141 and dug toward the display 101 from a surface facing the plate 340. The second portion 321 may be dug from a surface of the protection structure 320.

Referring to FIG. 6A cut along A-A of FIG. 4, the second portion 321 may be disposed between a first portion 322 and a third portion 323. Each of the first portion 322 and the third portion 323 disposed on both sides of the second portion 321 may be in contact with a horizontal side 342 and a protrusion 343 of a stepped portion S of the plate 340. The first portion 322 and the horizontal side 342 of the stepped portion S may be attached to each other by the first adhesive member 410. The first adhesive member 410 may be disposed between the first portion 322 and the horizontal side 342 of the stepped portion S. The first adhesive member 410 may be disposed along the side wall 141. The third portion 323 and the protrusion 343 may be attached to each other by the second adhesive member 420. The second adhesive member 420 may be disposed between the third portion 323 and the protrusion 343. The second adhesive member 420 may be disposed along a side of the second portion 321. The second adhesive member 420 may be disposed along a side of a recessed portion 341 of the plate 340. The second adhesive member 420 may be spaced apart from the first adhesive member 410. The second adhesive member 420 may reinforce an adhesive force between the display 101 and the housing 110. The first adhesive member 410 and the second adhesive member 420 may be spaced apart from the second portion 321. The first portion 322 on the first adhesive member 410 and the third portion 323 on the second adhesive member 420 may be a point where a force due to an external impact is transmitted. The second portion 321 between the first adhesive member 410 and the second adhesive member 420 may be a portion having a relatively small force transmitted by an external impact. An external impact transmitted to the second extension portion 312 disposed on the second portion 321 may be small. Since the second portion 321 may be spaced apart from the plate 340, which is an internal structure of the electronic device 100, damage to the display 101 caused by sagging of the display 101 due to an external impact may also be reduced.

The elastic member 430 may be spaced apart from the second adhesive member 420. The elastic member 430 may be spaced apart from the second adhesive member 420 to an interior of the electronic device 100. The elastic member 430 may be disposed on the plate 340 of the housing 110. The elastic member 430 may be spaced apart from the rear surface of the display 101. The elastic member 430 may be disposed in an area in which a gap between the plate 340 and the display 101 is narrow. For example, a portion on which the elastic member 430 is disposed may protrude from a surface on which the first adhesive member 410 or the second adhesive member 420 is disposed toward the display 101. A step may be included between a surface of the plate 340 on which the elastic member 430 is disposed and a surface of the plate 340 on which the second adhesive member 420 is disposed. The elastic member 430 may include a porous material, rubber, or sponge. When the rear surface of the display 101 sags due to an external impact due to the narrow space between the display 101 and the surface of the plate 340 on which the elastic member 430 is disposed, the rear surface of the display 101 may be in contact with the plate 340 of the housing 110. The elastic member 430 may reduce damage to the display 101 from contact between the rear surface of the display 101 and the plate 340 of the housing 110.

Referring to FIG. 6B cut along B-B of FIG. 4 and FIG. 6C cut along C-C of FIG. 4, the second adhesive member (e.g., the second adhesive member 420 of FIG. 6A) and/or the elastic member 430 may be omitted around an interface 609 (e.g., USB interface or power interface) for connection with an external electronic device. The electronic device 100 may further include an adhesive member 630 disposed between a first supporting plate 340 and a structure of the interface 609. The adhesive member 630 may prevent inflow of a foreign substance or moisture through a gap between the first supporting plate 340 and the structure for the interface 609. The plate 340 of a portion in which the interface 609 is disposed may further include a protruding portion 641 from the recessed portion 341. The protruding portion 641 may be formed according to a disposition of the interface 609. The protruding portion 641 may be curved according to a shape of the interface 609.

The second portion 321 of FIG. 6B may extend from a partial area of the protection structure 320 to an area in which a second rib is disposed. A middle portion of the extension portion 310 having relatively high rigidity among the extension portions 310 of the display 101 may reduce damage to the second extension portion 312 of the extension portion 310 of the display 101, even when the second adhesive member 420 is omitted. As the second portion 321 is expanded, a portion surrounding the second extension portion 312 may be thinned, and thus may be spaced apart from the plate 340.

The protection structure 320 of FIG. 6C may further include a reinforcing portion 621 separating the second portion 321. The reinforcing portion 621 may be filled in a portion of the second portion 321. The reinforcing portion 621 may be disposed on the interface 609 disposed in a lower portion of the electronic device 100. The reinforcing portion 621 may reinforce rigidity of the protection structure 320 that is weakened by including the second portion 321. In order to reduce a rebound force transmitted through the reinforcing portion 621, the reinforcing portion 621 of the protection structure 320 may be spaced apart from the plate 340. As the reinforcing portion 621 is spaced apart from the plate 340, damage to wires in the second extension portion 312 disposed on the reinforcing portion 621 may be reduced.

According to the above-described embodiment, the electronic device 100 may provide a structure for reducing a rebound force transmitted to the extension portion 310, which is a vulnerable portion of the display 101. The electronic device 100 may include the protection structure 320 protecting the extension portion 310. The protection structure 320 may include a second portion 321 below the second extended portion 312, in order to reduce a rebound force transmitted to the second extension portion 312 in which wires extending to a driving circuit of the display are disposed. The protection structure 320 including the second portion 321 may reduce a rebound force transmitted to the second extension portion 312 through the first portion 322.

According to an embodiment, an electronic device having a protection structure may reduce damage to a bent portion of a display. The protection structure including a recessed portion overlapping a vulnerable portion may reduce a rebound force or external impact transmitted to a vulnerable portion of a display substrate. The protection structure may reinforce weakened rigidity caused by including the recessed portion, by including a reinforcing portion filling the recessed portion.

The technical problems to be achieved in this document are not limited to those described above, and other technical problems not mentioned herein will be clearly understood by those having ordinary knowledge in the art to which the present disclosure belongs, from the following description.

According to the above-described embodiment, an electronic device (e.g., the electronic device 100 of FIG. 3) may include a housing (e.g., the housing 110 of FIG. 3). The housing may include a plate (e.g., the plate 340 of FIG. 3). The housing may further include a side wall (e.g., the side wall 141 of FIG. 3). The side wall may be disposed along an edge of the plate. The electronic device may include a display (e.g., display 101 of FIG. 3). The display may be disposed at least partially within the housing. The display may include a display panel (e.g., the display panel 301 of FIG. 3). The display may further include a substrate (e.g., the extension portion 310 of FIG. 3). The substrate may be bent from a side of the display panel and extend into the housing. The electronic device may further include a protection structure (e.g., the protection structure 320 of FIG. 3). The protection structure may surround a side of the display panel and the substrate and extend along a portion of the side wall. The electronic device may further include an adhesive member (e.g., the adhesive member 330 of FIG. 3 or the first adhesive member 410 of FIG. 4). The adhesive member may be disposed between the protection structure and the plate. The protection structure may include a recessed portion (e.g., the second portion 321 of FIG. 3) formed along a portion of the side wall and dug from a surface facing the plate toward the display. The adhesive member may be disposed along the side wall between the plate of the housing and a portion (e.g., the first portion 322 of FIG. 3) of the protection structure, disposed between the recessed portion and the side wall.

According to the above-described embodiment, an electronic device may provide a protective structure having a structure for reducing a rebound force transmitted to a substrate, which is a vulnerable portion of a display. The protection structure may include a recessed portion below the second portion, in order to reduce a rebound force transmitted to a second portion of the display in which wires extending to a driving circuit of the display are disposed. The recessed portion may reduce a rebound force transmitted to the second portion of the display through a first rib generated by an external impact.

The adhesive member may be in contact with a portion of the protective structure and the plate and may support a portion of the protection structure.

As the adhesive member connects a portion of the protection structure with the plate, a portion on which the impact is concentrated may be a portion (or a first rib) of the protection structure.

The substrate may include a first portion extended and bent from the display panel, and a second portion connected to the first portion and in contact with a rear surface of the display panel facing an interior of the housing. The adhesive member may be spaced apart from the second portion when the display 101 is viewed from above.

The recessed portion may be overlapped with the second portion when the display 101 is viewed from above.

Since a recessed portion is spaced apart from the plate, contact between a protection structure disposed below the second portion and another structure may be prevented by the recessed portion despite external impact.

The plate may include a groove dug in a direction toward a rear surface of the housing and extending along a portion of the side exterior surface. At least a portion may overlap the recessed portion. When the display 101 is viewed from above, the plate may be at least partially overlapped with the recessed portion.

Due to an increased separation distance through a groove overlapping a portion of a recessed portion, contact between a protection structure disposed below a second portion and another mechanism may be prevented despite of external impact.

The protection structure may include a reinforcing portion in which a portion of the recessed portion is filled, and may be symmetrical with respect to the reinforcing portion.

An external force applied to a portion of the display adjacent to the substrate from an exterior of the electronic device may be transmitted to the adhesive member and a portion of the plate contacting with the adhesive member through the protection structure.

The protection structure may include a first rib (e.g., the first portion 322 of FIG. 3), which is a portion of the protection structure, and a second rib (e.g., the third portion 323 of FIG. 3) facing the first rib with the recessed portion interposed therebetween.

The electronic device may further include an additional adhesive member (e.g., the second adhesive member 420 of FIG. 4) extending parallel to a portion of the side wall, supporting a portion of the display, and contacting the second rib and the plate.

The recessed portion may be disposed between the adhesive member and the additional adhesive member.

As an external impact is concentrated on the first rib and the second rib, an impact transmitted from an external impact to a second portion of the display on a recessed portion disposed between the first rib and the second rib may be reduced.

The electronic device may further include an elastic member. The elastic member may be spaced apart from the additional adhesive member.

The elastic member may be in contact with the plate and may be spaced apart from the display.

The elastic member may be spaced apart from the protection structure when the display is viewed from above.

The adhesive member may include a waterproof tape, a waterproof adhesive, or a sealing adhesive.

The protection structure may be disposed along an edge of the display extending along a portion of the side wall. A space between the substrate and the display may be filled.

The recessed portion may be spaced apart from the plate.

According to an embodiment, an electronic device (e.g., the electronic device 100 of FIG. 3) may include a housing (e.g., the housing 110 of FIG. 3). The housing may include a bracket (e.g., the plate 340 of FIG. 3) and a side wall (e.g., the side wall 141 of FIG. 3) connected to the bracket. The electronic device may further include a display (e.g., the display 101 of FIG. 3). The display may be disposed at least partially in the housing. The display may include a substrate (e.g., the extended portion 310 of FIG. 3). The substrate may be bent from a display panel and a side of the display panel to extend into the housing. The electronic device may further include a protection structure (e.g., the protection structure 320 of FIG. 3). The protection structure may surround a side of the display panel and the substrate and extend along a portion of the side wall. The adhesive member may be disposed between the protection structure and the bracket. The protection structure may include a recessed portion (e.g., the second portion 321 of FIG. 3). The recessed portion may be formed along a portion of the side wall and may be dug toward the display from a surface facing the bracket. The protection structure may further include a first rib (e.g., the first portion 322 of FIG. 3). The first rib may be disposed between the recessed portion and the side wall. The protection structure may further include a second rib (e.g., the third portion 323 of FIG. 3). The second rib may be spaced apart from the first rib. The recessed portion may be disposed between the first rib and the second rib. The adhesive member may be disposed between the first rib and the bracket.

The substrate may include a first portion extended and bent from the display panel, and a second portion connected to the first portion and in contact with a rear surface of the display panel facing an interior of the housing.

The adhesive member may be spaced apart from the second portion when the display is viewed from above.

The recessed portion may overlap the second portion when the display is viewed from above.

The protection structure may be disposed along an edge of the display extending along a portion of the side wall.

The protection structure may fill a space between the substrate and the display.

The recessed portion may be spaced apart from the plate.

Since the recessed portion and the plate are spaced apart, contact between a display and an internal structure may be reduced even when the display sags due to an external impact. According to the reduced contact, damage to the display panel or the bent portion may be reduced.

The effects that can be obtained from the present disclosure are not limited to those described above, and any other effects not mentioned herein will be clearly understood by those having ordinary knowledge in the art to which the present disclosure belongs, from the following description.

Fig. 8 is a block diagram illustrating an electronic device 801 in a network environment 800.

Referring to Fig. 8, the electronic device 801 in the network environment 800 may communicate with an electronic device 802 via a first network 898 (e.g., a short-range wireless communication network), or at least one of an electronic device 804 or a server 808 via a second network 899 (e.g., a long-range wireless communication network). The electronic device 801 may communicate with the electronic device 804 via the server 808. The electronic device 801 may include a processor 820, memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module (SIM) 896, or an antenna module 897. In some embodiments, at least one of the components (e.g., the connecting terminal 878) may be omitted from the electronic device 801, or one or more other components may be added in the electronic device 801. Some of the components (e.g., the sensor module 876, the camera module 880, or the antenna module 897) may be implemented as a single component (e.g., the display module 860).

The processor 820 may execute, for example, software (e.g., a program 840) to control at least one other component (e.g., a hardware or software component) of the electronic device 801 coupled with the processor 820, and may perform various data processing or computation. As at least part of the data processing or computation, the processor 820 may store a command or data received from another component (e.g., the sensor module 876 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), or an auxiliary processor 823 (e.g., a graphics processing unit (GPU), a neural processing unit (NPU), an image signal processor (ISP), a sensor hub processor, or a communication processor (CP)) that is operable independently from, or in conjunction with, the main processor 821. For example, when the electronic device 801 includes the main processor 821 and the auxiliary processor 823, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display module 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823. The auxiliary processor 823 (e.g., the neural processing unit) may include a hardware structure specified for artificial intelligence model processing. An artificial intelligence model may be generated by machine learning. Such learning may be performed, e.g., by the electronic device 801 where the artificial intelligence is performed or via a separate server (e.g., the server 808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820) of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as playing multimedia or playing record. The receiver may be used for receiving incoming calls. The receiver may be implemented as separate from, or as part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. The display module 860 may include a touch sensor adapted to detect a touch, or a pressure sensor adapted to measure the intensity of force incurred by the touch.

The audio module 870 may convert a sound into an electrical signal and vice versa. The audio module 870 may obtain the sound via the input module 850, or output the sound via the sound output module 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. The interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). The connecting terminal 878 may include, for example, a HDMI connector, a USB connector, a SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. The haptic module 879 may include, for example, a motor, a piezoelectric element, or an electric stimulator.

The camera module 880 may capture a still image or moving images. The camera module 880 may include one or more lenses, image sensors, image signal processors, or flashes.

The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or infrared data association (IrDA)) or the second network 899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The wireless communication module 892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., the mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 892 may support various requirements specified in the electronic device 801, an external electronic device (e.g., the electronic device 804), or a network system (e.g., the second network 899). The wireless communication module 892 may support a peak data rate (e.g., 20Gbps or more) for implementing eMBB, loss coverage (e.g., 864dB or less) for implementing mMTC, or U-plane latency (e.g., 0.5ms or less for each of downlink (DL) and uplink (UL), or a round trip of 8ms or less) for implementing URLLC.

The antenna module 897 may transmit or receive a signal or power to or from the outside (e.g., the external electronic device) of the electronic device 801. The antenna module 897 may include an antenna including a radiating element composed of a conductive material or a conductive pattern formed in or on a substrate (e.g., a printed circuit board (PCB)). The antenna module 897 may include a plurality of antennas (e.g., array antennas). In such a case, at least one antenna appropriate for a communication scheme used in the communication network, such as the first network 898 or the second network 899, may be selected, for example, by the communication module 890 (e.g., the wireless communication module 892) from the plurality of antennas. The signal or the power may then be transmitted or received between the communication module 890 and the external electronic device via the selected at least one antenna. According to an embodiment, another component (e.g., a radio frequency integrated circuit (RFIC)) other than the radiating element may be additionally formed as part of the antenna module 897.

The antenna module 897 may form a mmWave antenna module. The mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 801 and the external electronic device 804 via the server 808 coupled with the second network 899. Each of the electronic devices 802 or 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an internet-of-things (IoT) device. The server 808 may be an intelligent server using machine learning and/or a neural network. The external electronic device 804 or the server 808 may be included in the second network 899. The electronic device 801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100) comprising:
a housing comprising a supporting structure (143, 340) and a side wall (141) forming a side exterior surface of the electronic device;
a display comprising a display panel (301) including a display portion (301a) and an extension portion (310), the extension portion including a first extension portion (311) bent from the display portion (301a) and a second extension portion (312) extending from the first extension portion (311); and
a molding (320) surrounding at least a portion of the extension portion (310) of the display panel,
wherein the molding (320) comprises:
a first portion (322) adhesively attached to the supporting structure (143, 340), and
a second portion (321) having a recessed area facing the supporting structure (140, 340), and
wherein the recessed area overlaps the second extension portion (312) of the display panel when viewed in a direction orthogonal to the plane of the display panel (301).

2. The electronic device of claim 1, wherein the molding (320) is spaced apart from the supporting structure (143, 340), and the supporting structure (143, 340) comprises a recessed portion (341) which at least partially overlaps the second portion (321) of the molding (320), and
wherein the recessed area of the molding (320) is spaced apart from the recessed portion (341) of the supporting portion by a distance greater than the sum of the depth of the recessed area of the molding and the depth of the recessed portion (341) of the supporting structure.

3. The electronic device of claim 1 or 2, further comprising an adhesive member (330) coupling the molding (320) and the supporting structure (143, 340),
wherein the supporting structure includes a stepped portion (S) include a surface facing the first portion (322) of the molding (320), and
the stepped portion (S) is attached to the first portion (322) of the molding through the adhesive member (330, 410).

4. The electronic device of claim 3, wherein the recessed portion (341) of the supporting structure (143, 340) is recessed toward a rear surface of the housing and extends along the adhesive member (330, 410).

5. The electronic device of any one of claims 1 to 4, wherein the molding (320) further comprises a reinforcing portion (621) that fills part of the second portion (321) and the molding (320) is symmetrical with respect to the reinforcing portion.

6. The electronic device of claim 3 or 4, wherein the molding is configured to transmit an external force applied to a portion of the display adjacent to the extension portion (310) to the adhesive member (330, 410) and a protrusion of the supporting structure (143, 340) in contact with the adhesive member.

7. The electronic device of any one of claims 1 to 6, wherein the molding comprises a third portion (323) opposite the first portion with the second portion (321) in between.

8. The electronic device of claim 7, further comprising an additional adhesive member (420) in contact with the third portion (323) and the supporting structure (340) and supporting a portion of the display.

9. The electronic device of claims 7 or 8, wherein the second portion (322) is disposed between the adhesive member (410) and the additional adhesive member (420).

10. The electronic device of claims 8 or 9, further comprising an elastic member (430) spaced apart from the additional adhesive member (420), and
wherein the elastic member (430) is in contact with the supporting structure (340) and spaced apart from the display.

11. The electronic device of claim 10, wherein the elastic member (430) is spaced apart from the molding (320).

12. The electronic device of claim 3 or 4, wherein the adhesive member comprises a waterproof tape, a waterproof adhesive, or a sealing adhesive.

13. The electronic device of any one of claims 1 to 12, wherein the molding (320) is disposed along an edge of the display facing the side wall (141) of the housing and filling a space between the extension portion (310) and the display panel (301).

14. The electronic device of claim 3 or 4,
wherein the adhesive member (330, 410) is spaced apart from the second extension portion (312), when viewed in a direction orthogonal to the plane of the display panel (301).

15. The electronic device of claim 1, wherein the supporting structure is a bracket supporting an element included in the electronic device.
